# EUROPEAN PATENT SPECIFICATION

(11) **EP 1 281 776 B1**
(45) Date of publication and mention of the grant of the patent: **30.06.2004**
(21) Application number: 01830527.6
(22) Date of filing: 03.08.2001
(51) Int. Cl.: C21C 7/00, C21C 5/54, C21C 5/52, C21C 7/076

(54) **Composition for hindering the formation of iron oxides in steel-melting slag and process for obtaining a slag with a low level of iron oxides**
Zusammensetzung zur Verringerung der Eisenoxidbildung in Schlacken von Stahlschmelzen und Verfahren zur Herstellung einer Schlacke mit niedrigem Eisenoxidgehalt
Composition pour réduire la formation d'oxydes du fer dans le laitier d'acier en fusion et procédé pour obtenir un laitier à faible teneur en oxydes de fer

(43) Date of publication of application: 05.02.2003
(73) Proprietor: Minerals & Metals Italia S.p.A., 24065 Lovere (Bergamo) (IT)
(72) Inventor: Bellicini, Marcello, 24065 Lovere (Bergamo) (IT)
(74) Representative: Marchi, Massimo

(56) References cited:
- EP-A- 1 028 166
- US-A- 4 060 406
- US-A- 5 397 379
- DATABASE WPI Section Ch, Week 199007 Derwent Publications Ltd., London, GB; Class M22, AN 1990-050468 XP002187574 "heat-insulating slag-forming mixture for iron" & SU 1 477 509 A (ZHDANOV METAL INST), 7 May 1989 (1989-05-07)
- PATENT ABSTRACTS OF JAPAN vol. 010, no. 383 (C-393), 23 December 1986 (1986-12-23) & JP 61 174312 A (DAIDO STEEL CO LTD), 6 August 1986 (1986-08-06)
- PATENT ABSTRACTS OF JAPAN vol. 1998, no. 12, 31 October 1998 (1998-10-31) & JP 10 183219 A (NIPPON STEEL CORP), 14 July 1998 (1998-07-14)
- DATABASE WPI Section Ch, Week 199406 Derwent Publications Ltd., London, GB; Class L02, AN 1994-046665 XP002187575 & RU 2 000 344 C (DNEPR METAL INST), 7 September 1993 (1993-09-07)

## Description

The present invention relates to a composition capable of hindering and reducing the formation of iron oxides in steel melting slag, and to a process for obtaining a slag with a low level of iron oxides.

More particularly, this invention relates to a composition capable of hindering and reducing the formation of iron oxides in the slag formed during the production of steel from scrap iron in an electric furnace, and to a melting process that involves the use of such composition.

Direct-arc electric furnaces, such as, for example, of the eccentric bottom tapping (EBT) type are widely used nowadays for making steel from scrap iron. These have a taphole at the bottom for tapping the molten steel into a ladle or they have a taphole at the side. These furnaces use the energy released by conduction, convection and radiation from an electric arc, which is set up between graphite electrodes (introduced from the roof of the furnace) and the material charged into the furnace.

These furnaces generally have a well-known cylindrical crucible structure with a vertical axis (shaft furnace) and a concave hearth made of drawn plates.

The bottom is lined with about 30 cm refractory blocks and with about 60 cm conducting refractory hearth material. The side walls are lined with about 70 cm refractory material, an approximately 30 cm section of which is the slag turning zone, and the other approximately 30 cm section is represented by the safety ledge.

The roof of the furnace is made of a metallic material and is cooled with water.

The charge of the furnace generally consists of about 90 wt-% of scrap iron and about 10 wt-% of pig iron and/or carbon. Additives such as lime and limestone are added later, during the melting operation in order to form a slag, while a fine carbon powder is introduced to protect the lining of the side walls and the roof from radiation.

Before being charged into the furnace, the scrap iron and pig iron are graded on the basis of the usual parameters such as size and chemical composition.

The charge is then introduced into the furnace from above, using suitable baskets, which are preferably preheated with fuel-fired burners to facilitate the melting operation.

The production capacity of the furnace is generally of from 60 to 120 tonnes.

When the charging stage is finished, the furnace is closed by lowering its roof. The latter generally carries three electrodes, which are arranged in the corners of an equilateral triangle, in order to balance the three-phase power circuit correctly.

During the melting process, a current of oxygen is blown into the molten bath through refractory nozzles located on the bottom or at the side of the furnace. Typically the amount of oxygen which is introduced rages of from about 35 to 42 Nm³ per tonne of charge material. This corresponds to a flow-rate of 4200-5040 Nm³ per hour for melting 100 tonnes of scrap iron, the total time being 50 minutes.

The main function of the oxygen is to remove the unwanted chemical elements present in the scrap iron and the pig iron, by oxidation. These elements are, for example, silicon, aluminium, vanadium, titanium, zirconium, lead, zinc, magnesium, calcium and excess carbon.

However, this stage also involves the undesirable oxidation of a certain amount of iron.

The resulting oxides pass from the molten bath to the surface, where they form a floating layer collectively called slag.

Other undesired chemical elements, such as for example sulphur, oxygen and some others are only partly removed during this stage. Their removal is completed later, during the treatment to which the steel is subjected in the subsequent steps called "outside the furnace", such as, for example, first in the ladle and then in a ladle furnace.

This melting process in an electric furnace also involves the addition of a certain amount of carbon. Advantageously the first batch of carbon is introduced with the scrap iron at the beginning of the process, typically it rages from about 10 to about 12 kg per tonne of scrap iron. A second batch is added a few minutes before the end of the melting process; typically this batch amounts from about 2 to about 5 kg per tonne of scrap iron.

At the end of the melting step, the liquid steel has approximately the following chemical composition by weight: 0.1% of C, 0.2% of Mn, no Si, 0.015% of P, 0.030% of S, no Al, and traces of Cu, Sn, Bi, As and Sb, the rest being Fe.

The level of Cu, Sn, Bi, As and Sb can only be regulated via the choice of the charge materials introduced into the furnace.

When the molten steel has reached the required chemical composition, it is tapped into the ladle.

The furnace is generally not discharged fully, and the slag floating on top of the liquid steel is collected separately. When the steel has been tapped into the ladle, a small amount of steel (the "foot" of the bath) is kept in the furnace to facilitate the onset of the melting of the next charge.

The slag extracted is then discharged into a suitable container, where it is cooled, crushed, reduced to small pieces, and finally dumped on a slag heap, because it cannot be re-used.

This slag therefore represents a financial loss, due partly to the loss of iron and heat it takes with it, and partly to the cost of transport and suitable disposal.

Depending on the type of scrap iron, characteristics of the furnace, and operation conditions, the amount of slag formed in the melting process typically ranges from 10 to 14% of the molten mass and the slag composition (by weight) ranges within the following limits: SiO₂ = 8-15%; Al₂O₃ = 3-7%; Fe₂O₃ = 36-55%; MnO = 4-8%; Cr₂O₃ = 1-4%; CaO = 19-25%; MgO = 2-6% plus minor amounts of other compounds.

It follows therefore that about 3.5-7.7 tonnes of Fe₂O₃, corresponding to about 2.5-5.5 tonnes of iron, are formed in the production of a batch of about 100 tonnes of steel. This represents a loss of about 2.5-5.5% of the iron charged into the furnace, with a consequent increase in cost.

It is known that the addition of metallic aluminium in granular form counteracts the formation of iron oxides and would improve the results of the melting process.

However, this material is fairly expensive and would be needed in a rather large amount. Indeed, on the basis of its redox potential (E₀ = - 1.706), the stoichiometric amount of metallic aluminium in granular form that is needed to counteract the loss (i.e. the oxidation) of 1 tonne of iron is about 322 kg. In other words, 644 kg of granular metallic aluminium would be needed to reduce this loss from about 4% to about 2%. However, the yield of this redox reaction in practice never reaches the theoretical value, and the required amount of granular metallic aluminium is more expensive than the iron recovered. As this process is not economic, it has not been put into use.

Although the iron oxide present in the largest amount in the slag is ferric oxide (Fe₂O₃), the term "iron oxides" used in this Description and the Claims is not limited to this compound but also includes all the other iron oxides, such as for example Fe₃O₄, FeO and Fe_{0.97}O.

EP-A-1 028 166 of the present Applicant discloses and claims a composition and a process for hindering and decreasing the formation of iron oxides in steel-melting slag.

The said known composition comprises from 35 to 50 wt-% of C, from 10 to 20 wt-% of Al, from 25 to 40 wt-% of Al₂O₃, from 0 to 3 wt-% of CaO and from 0 to 3 wt-% of MgO, provided however that the combined amount of CaO and MgO is of from 1 to 6%.

Now the Applicant has surprisingly found that the performances obtainable by the composition of EP-A-1 028 166 may be further improved without giving up the economical advantage of using byproducts from other metallurgical processes such as, for example, the slag formed in the production of primary aluminium (where the metal is obtained from its ore), in the production of secondary aluminium (where the metal is obtained from aluminium scrap), and in the production of silicon.

It is therefore a first object of this invention to provide a composition comprising: from 50 to 60 wt-% of C, from 7 to 10 wt-% of Al, from 15 to 20 wt-% of Al₂O₃, from 7 to 10 wt-% of CaO and from 2 to 5 wt-% of MgO.

Preferably, this composition further contains from 2 to 7 wt-% and, even more preferably, from 4 to 6 wt-% of SiO₂.

Preferably, the amount of C in said composition ranges from 54 to 57%; the amount of aluminium ranges from 8 to 9%; the amount of aluminium oxide ranges from 16 to 19%; the combined amount of calcium oxide and magnesium oxide ranges from 9 to 12%.

In a first preferred embodiment, the composition of this invention is a powder wherein the average particle size is of from 0.1 to 5 mm, and even more preferably, of from 0.1 to 1.5 mm.

In a second preferred embodiment, the composition of this invention is a mixture of agglomerated masses preferably having a size ranging from 20 to 120 mm.

The composition of this invention is preferably prepared by finely grinding the components, then adding a binder and granulating the resulting paste to obtain granules having a predetermined average size. Preferably the binder is diluted with water.

Particularly suitable are binders based on aluminium and silicon compounds, and optionally some further elements, such as, for example, montmorillonites, also known as bentonites.

It is therefore a second object of the present invention to provide a process for the preparation of a granular composition, which comprises the following steps:
1) mixing together carbon, aluminium, aluminium oxide, calcium oxide and magnesium oxide,
2) kneading such mixture,
3) drying,
4) granulating the thus obtained mixture, and
5) optionally grounding of the thus obtained mixture,
characterized in that
100 parts by weight of said mixture comprise from 50 to 60 wt-% of C, from 7 to 10 wt-% of Al, from 15 to 20 wt-% of Al₂O₃, from 7 to 10 wt-% of CaO and from 2 to 5 wt-% of MgO.

As already said, the kneading step is preferably carried out in the presence of water and, even more preferably, with a suitable binder. In the specific case when bentonite is used, the amount of the binder added is of from 3 to 15 wt-%, calculated on the mass to be granulated, and 6-15 wt-% of water are also added, this quantity being also calculated on the mass to be granulated.

The drying step is preferably carried out at 50-200°C.

Alternatively, the composition of this invention is prepared by simply mixing the components together, without the kneading, drying and granulation steps.

According to a third object, the present invention provides a process for hindering and reducing the formation of iron oxides in the slag during the production of steel in an electric furnace, wherein:
a) scrap iron is melted in the presence of conventional additives, and
b) a current of oxygen is passed into the molten bath, characterized in that
c) 3-12 kg of a composition are introduced per tonne of molten steel over a period of at least 10 minutes in the last stage of the melting operation, before the steel is tapped into the ladle, where said composition comprises, per 100 parts by weight from 50 to 60 wt-% of C, from 7 to 10 wt-% of Al, from 15 to 20 wt-% of Al₂O₃, from 7 to 10 wt-% of CaO and from 2 to 5 wt-% of MgO.

Preferably, the amount of the composition introduced into the molten bath is of from 4 to 8 kg per tonne of molten steel.

Advantageously, when the composition of the invention is in the form of a powder, it is introduced into the furnace by blowing it above and/or below the slag by using dried air as a transporting vehicle.

Alternatively, when the composition of this invention is in the form of a powder it may also be introduced directly into the molten bath by injecting it with a supersonic lance, placed at the side of the furnace, or by injecting it through the pipework under the furnace or at the side of the furnace, or in some other suitable way, such as, for example, adding it from bags during the charging of the furnace.

In turn, when the composition of this invention is in the form of agglomerated masses it is introduced into the furnace through the roof or door thereof.

The following examples aim at illustrating this invention without, however, limiting it in any way.

### EXPERIMENTS

### EXAMPLE 1

| Preparation of the composition of this invention | | |
|---|---|---|
| Ingredients | kg | % |
| Al | 60 | 8.57 |
| Al₂O₃ | 130 | 18.57 |
| CaO | 60 | 8.57 |
| MgO | 20 | 2.86 |
| C | 390 | 55.71 |
| SiO₂ | 40 | 5.71 |

The above quantities of C, Al, Al₂O₃, CaO, MgO and SiO₂ were thoroughly mixed and kneaded with 40 kg of bentonite and 53 litres of water, agglomerated, dried at 155°C in an oven with hot air, screened and grounded to obtain a fine having a particle size of from 0.1 to 2.5 mm.

### EXAMPLE 2

### Use of the composition of the invention

95.5 tonnes of scrap iron, 6 tonnes of pig iron and 300 kg of carbon in pieces were introduced from above into a direct-arc electric furnace with eccentric bottom tapping (EBT) having a capacity of 100 tonnes, these charge materials being introduced with the aid of baskets.

The furnace was then closed by lowering the roof, and the charge was heated to about 1650°C.

A current of oxygen amounting to 32 Nm³ per tonne of charge was injected into the molten bath during the melting operation from the side of the furnace, using a supersonic lance.

A sample taken from the slag about 18 minutes before the tapping of the molten steel was found to have the following percent composition by weight: 13.38% of SiO₂; 3.73% of Al₂O₃; 46.22% of Fe₂O₃; 6.22% of MnO; 2.63% of Cr₂O₃; 20.82% of CaO; 4.35% of MgO; minor comonents, 2.66%. The total amount of slag formed was estimated to be about 12 tonnes.

700 kg of the composition prepared according to Example 1 were introduced above and below the slag layer with the aid of dried air under pressure. This operation was begun directly after the sample was taken and it lasted 16 minutes.

This gave 12.2 tonnes of a slag containing 28.75 wt-% of Fe₂O₃, calculated on the total weight of the slag.

### COMPARATIVE EXAMPLE 1

The procedure of Example 2 was repeated except that it has been used Composition A of Example 1 of EP-A-1 028 166, having the following wt-%: Al = 12.86%; Al₂O₃ = 30.00%; CaO = 2.86%; MgO = 2.14%; C = 45.00%; SiO₂ = 7.14%.

The final slag contained 33.83 wt-% of Fe₂O₃, calculated on its total weight.

Therefore, the decrease of iron in the slag obtainable with the composition of the present invention is higher of at least 10% compared to the important reduction obtainable with the composition of EP-A-1 028 166.

## Claims

1. A composition comprising: from 50 to 60 wt-% of C, from 7 to 10 wt-% of Al, from 15 to 20 wt-% of Al₂O₃, from 7 to 10 wt-% of CaO and from 2 to 5 wt-% of MgO.

2. A composition according to claim 1, **characterized in that** it further contains from 2 to 7 wt-% of SiO₂.

3. A composition according to claim 2, **characterized in that** it contains from 4 to 6 wt-% of SiO₂.

4. A composition according to any one of claims 1 to 3, **characterized in that** the amount of C ranges from 54 to 57%.

5. A composition according to any one of claims 1 to 3, **characterized in that** the amount of aluminium ranges from 8 to 9%.

6. A composition according to any one of claims 1 to 3, **characterized in that** the amount of aluminium oxide ranges from 16 to 19%.

7. A composition according to any one of claims 1 to 3, **characterized in that** the combined amount of calcium oxide and magnesium oxide ranges from 9 to 12%.

8. A composition according to any one of claims 1 to 7, **characterized in that** the composition is a powder wherein the average particle size is of from 0.1 to 5 mm.

9. A composition according to claim 8, **characterized in that** the composition is a powder wherein the average particle size is of from 0.1 to 1.5 mm.

10. A composition according to any one of claims 1 to 7, **characterized in that** the composition is a mixture of agglomerated masses having a size ranging from 20 to 120 mm.

11. A process for the preparation of a granular composition, which comprises the following steps:
1) mixing together carbon, aluminium, aluminium oxide, calcium oxide and magnesium oxide,
2) kneading such mixture,
3) drying,
4) granulating the thus obtained mixture, and
5) optionally grounding of the thus obtained mixture,
**characterized in that**
100 parts by weight of said mixture comprise from 50 to 60 wt-% of C, from 7 to 10 wt-% of Al, from 15 to 20 wt-% of Al₂O₃, from 7 to 10 wt-% of CaO and from 2 to 5 wt-% of MgO.

12. A process according to claim 11, **characterized in that** step 2 is carried out in the presence of water.

13. A process according to claim 11 or 12, **characterized in that** step 2 is carried out in the presence of a binder.

14. A process according to claim 13, **characterized in that** the said binder is bentonite.

15. A process according to claim 12 to 14, **characterized in that** the amount of bentonite is of from 3 to 15 wt-% and the amount of water ranges from 6 to 15 wt-%, calculated on the mass to be granulated.

16. A process according to claim 12 to 15, **characterized in that** step 3 is carried out at a temperature of from 50 to 200°C.

17. A process for hindering and reducing the formation of iron oxides in the slag during the production of steel in an electric furnace, wherein:
a) scrap iron is melted in the presence of conventional additives, and
b) a current of oxygen is passed into the molten bath,
**characterized in that**
c) 3-12 kg of a composition are introduced per tonne of molten steel over a period of at least 10 minutes in the last stage of the melting operation, before the steel is tapped into the ladle, where said composition comprises, per 100 parts by weight from 50 to 60 wt-% of C, from 7 to 10 wt-% of Al, from 15 to 20 wt-% of Al₂O₃, from 7 to 10 wt-% of CaO and from 2 to 5 wt-% of MgO.

18. A process according to claim 17, **characterized in that** the amount of the said composition introduced during step c) is of from 4 to 8 kg per tonne of molten steel.

## Patentansprüche

1. Zusammensetzung, umfassend 50 bis 60 Gew.-% C, 7 bis 10 Gew.-% Al, 15 bis 20 Gew.-% Al₂O₃, 7 bis 10 Gew.-% CaO und 2 bis 5 Gew.-% MgO.

2. Zusammensetzung nach Anspruch 1, enthaltend weiterhin 2 bis 7 Gew.-% SiO₂.

3. Zusammensetzung nach Anspruch 2, enthaltend 4 bis 6 Gew.-% SiO₂.

4. Zusammensetzung nach einem der Anspüche 1 bis 3, worin der Anteil an C im Bereich von 54 bis 57 % liegt.

5. Zusammensetzung nach einem der Anspüche 1 bis 3, worin der Anteil an Aluminium im Bereich von 8 bis 9 % liegt.

6. Zusammensetzung nach einem der Anspüche 1 bis 3, worin der Anteil an Aluminiumoxid im Bereich von 16 bis 19 % liegt.

7. Zusammensetzung nach einem der Anspüche 1 bis 3, worin die Gesamtmenge an Magnesiumoxid und Calciumoxid im Bereich von 9 bis 12 % liegt.

8. Zusammensetzung nach einem der Ansprüche 1 bis 7, wobei die Zusammensetzung ein Pulver ist, worin die durchschnittliche Teilchengröße 0,1 bis 5 mm beträgt.

9. Zusammensetzung nach Anspruch 8, wobei die Zusammensetzung ein Pulver ist, worin die durchschnittliche Teilchengröße 0,1 bis 1,5 mm beträgt.

10. Zusammensetzung nach einem der Ansprüche 1 bis 7, wobei die Zusammensetzung eine Mischung agglomerierter Massen ist, die eine Größe im Bereich von 20 bis 120 nm aufweisen.

11. Verfahren zur Herstellung einer granulären Zusammensetzung, umfassend die folgenden Schritte:
1) Vermischen von Kohlenstoff, Aluminium, Aluminiumoxid, Calciumoxid und Magnesiumoxid,
2) Kneten dieser Mischung,
3) Trocknen,
4) Granulieren der so erhaltenen Mischung,
5) gegebenenfalls Vermahlen der so erhaltenen Mischung,
wobei 100 Gewichtsteile der Mischung 50 bis 60 Gew.-% C, 7 bis 10 Gew.-% Al, 15 bis 20 Gew.-% Al₂O₃, 7 bis 10 Gew.-% CaO und 2 bis 5 Gew.-% MgO umfassen.

12. Verfahren nach Anspruch 11, wobei man Schritt 2 in Gegenwart von Wasser durchführt.

13. Verfahren nach Anspruch 11 oder 12, wobei man Schritt 2 in Gegenwart eines Bindemittels durchführt.

14. Verfahren nach Anspruch 13, wobei das Bindemittel Bentonit ist.

15. Verfahren nach den Ansprüchen 12 bis 14, wobei die Menge an Bentonit 3 bis 15 Gew.-% und die Menge an Wasser 6 bis 15 Gew.-%, bezogen auf die zu granulierende Masse beträgt.

16. Verfahren nach den Ansprüchen 12 bis 15, wobei Schritt 3 bei einer Temperatur von 50 bis 200°C durchgeführt wird.

17. Verfahren zur Verringerung und Vermeidung der Bildung von Eisenoxiden in der Schlacke bei der Stahlherstellung in einem elektrischen Ofen, wobei man:
a) Alteisen in Gegenwart üblicher Additive schmilzt,
b) einen Sauerstoffstrom durch das Schmelzbad einleitet,
c) pro Tonne geschmolzenem Stahl 3 bis 12 kg einer Zusammensetzung innerhalb eines Zeitraums von wenigstens 10 Minuten in der letzten Stufe des Schmelzprozesses, bevor der Stahl in den Tiegel abgestochen wird, zugibt,
wobei die Zusammensetzung 50 bis 60 Gew.-% C, 7 bis 10 Gew.-% Al, 15 bis 20 Gew.-% Al₂O₃, 7 bis 10 Gew.-% CaO und 2 bis 5 Gew.-% MgO umfasst.

18. Verfahren nach Anspruch 17, wobei die Menge der Zusammensetzung, die in Schritt c) zugegeben wird, 4 bis 8 kg pro Tonne geschmolzenem Stahl beträgt.

## Revendications

1. Composition comprenant de 50 à 60% en poids de C, de 7 à 10% en poids d'Al, de 15 à 20% en poids d'Al₂O₃, de 7 à 10% en poids de CaO et de 2 à 5% en poids de MgO.

2. Composition selon la revendication 1, **caractérisée en ce qu'**elle contient en outre de 2 à 7% en poids de SiO₂.

3. Composition selon la revendication 2, **caractérisée en ce qu'**elle contient de 4 à 6% en poids de SiO₂.

4. Composition selon l'une quelconque des revendications 1 à 3, **caractérisée en ce que** la quantité de C est de 54 à 57%.

5. Composition selon l'une quelconque des revendications 1 à 3, **caractérisée en ce que** la quantité d'aluminium est de 8 à 9%.

6. Composition selon l'une quelconque des revendications 1 à 3, **caractérisée en ce que** la quantité d'oxyde d'aluminium est de 16 à 19%.

7. Composition selon l'une quelconque des revendications 1 à 3, **caractérisée en ce que** la quantité combinée d'oxyde de calcium et d'oxyde de magnésium est de 9 à 12%.

8. Composition selon l'une quelconque des revendications 1 à 7, **caractérisée en ce que** la composition est une poudre dans laquelle la taille moyenne de particule est de 0,1 à 5 mm.

9. Composition selon la revendication 8, **caractérisée en ce que** la composition est une poudre dans laquelle la taille moyenne de particule est de 0,1 à 1,5 mm.

10. Composition selon l'une quelconque des revendications 1 à 7, **caractérisée en ce que** la composition est un mélange de masses agglomérées ayant une taille allant de 20 à 120 mm.

11. Procédé pour la préparation d'une composition granulaire, qui comprend les phases suivantes :
1) mélange ensemble de carbone, d'aluminium, d'oxyde d'aluminium, d'oxyde de calcium et d'oxyde de magnésium,
2) malaxage de ce mélange,
3) séchage
4) granulation du mélange ainsi obtenu, et
5) éventuellement broyage du mélange ainsi obtenu,
**caractérisé en ce que**
100 parties en poids dudit mélange comprennent de 50 à 60% en poids de C, de 7 à 10% en poids d'Al, de 15 à 20% en poids d'Al₂O₃, de 7 à 10% en poids de CaO et de 2 à 5% en poids de MgO.

12. Procédé selon la revendication 11, **caractérisé en ce que** la phase 2 est réalisée en présence d'eau.

13. Procédé selon la revendication 11 ou 12, **caractérisée en ce que** la phase 2 est réalisée en présence d'un liant.

14. Procédé selon la revendication 13, **caractérisé en ce que** ledit liant est la bentonite.

15. Procédé selon la revendication 12 à 14, **caractérisé en ce que** la quantité de bentonite est de 3 à 15% en poids et la quantité d'eau est de 6 à 15% en poids, calculé sur la masse à granuler.

16. Procédé selon la revendication 12 à 15, **caractérisé en ce que** la phase 3 est réalisée à une température de 50 à 200°C.

17. Procédé pour entraver et réduire la formation d'oxydes de fer dans le laitier pendant la production d'acier dans un four électrique, dans lequel :
a) Les riblons sont fondus en présence d'additifs conventionnels, et
b) un courant d'oxygène est passé dans le bain fondu,
**caractérisé en ce que**
c) 3-12 kg d'une composition sont introduits par tonne d'acier fondu, sur un laps de temps d'au moins 10 minutes, pendant la dernière phase de l'opération de fusion, avant que l'acier ne soit soutiré dans la poche de coulée, où ladite composition comprend, pour 100 parties en poids, de 50 à 60% en poids de C, de 7 à 10% en poids d'Al, de 15 à 20% en poids d'Al₂O₃, de 7 à 10% en poids de CaO et de 2 à 5% en poids de MgO.

18. Procédé selon la revendication 17, **caractérisé en ce que** la quantité de ladite composition introduite pendant la phase c) est de 4 à 8 kg par tonne d'acier fondu.
